Europäisches Patentamt

European Patent Office

Office européen des brevets

(19)

(11) Publication number: **0 116 719**
A2

## (12) EUROPEAN PATENT APPLICATION

(21) Application number: **83113217.0**

(22) Date of filing: **29.12.83**

(51) Int. Cl.³: **F 16 K 5/06**
**F 16 K 5/20**

(30) Priority: **24.01.83 US 460604**

(43) Date of publication of application:
**29.08.84 Bulletin 84/35**

(84) Designated Contracting States:
**AT BE CH DE FR GB IT LI LU NL SE**

(71) Applicant: MOGAS INDUSTRIES, INC.
14330 East Hardy Street
Houston Texas 77293(US)

(72) Inventor: Beasley, Marvin E.
7519 Apache Plume
Houston Texas 77071(US)

(74) Representative: Patentanwälte Grünecker, Dr.
Kinkeldey, Dr. Stockmair, Dr. Schumann, Jakob, Dr.
Bezold, Meister, Hilgers, Dr. Meyer-Plath
Maximilianstrasse 58
D-8000 München 22(DE)

(54) Combination spring seal for ball valves.

(57) A ball valve comprised of a valve body, a valve ball (4), an annular ball seat (1) and a combination spring seal (11) for biasing said seat against said ball, wherein said spring seals sealingly engages the valve body and the seat.

EP 0 116 719 A2

./...

Fig. 1

0116719
MOGA:003

## COMBINATION SPRING SEAL
## FOR BALL VALVES

The present invention relates to improvements in the sealing of ball type valving members. More specifically, this invention is directed to a ball valve having combination spring seal which maintains constant sealing contact between both the ball valve seat ring and the valve body, while biasing the seat ring into sealing contact with the valve ball.

Ball valves have long been known for the control of fluid flow. Typically, they are characterized by a spherically surfaced plug or ball having a flow opening through which it may be brought into and out of communication with flow ports in the valve body. The valve ball is angularly adjusted for these purposes by means of an actuating stem and handle connected to the ball at a single position. It is important that the angularly movable ball be well sealed in relation to the valve body and that leakage be suppressed. However, it is equally important that the frictional restraints imposed by seat seals must be preserved at low levels to permit ready adjustment of the valve by the operator. Accordingly, the development of this art has witnessed numerous proposals for designs of seat seals which promote these objectives. Among these designs are those in which the seat ring is biased against the valve ball by means of an annular spring.

Ball valves which are utilized under severe service conditions must meet additional requirements. Particularly troublesome operating conditions include those in which the fluid carries solid particles, for example in synthetic fuel plants where coal slurries are processed or in processes in which solid catalyst particles are handled.

For operation under such conditions one of the most important requirements of a ball valve is that solid particles not be allowed to lodge betwen the sealing surfaces. Of course, the sealing mechanism of the valve must be adequate to prevent flow through the valve when the valve is closed. Due to the abrasive nature of the fluids transported and to the high temperatures often encountered only metal to metal seals can be used. Non-metallic materials and low hardness metals if used for seals will not endure the severe service conditions. As even the best designed valves operating under such conditions require maintenance, it is an additional requirement that valve assembly must be uncomplicated and straightforward.

The use of an annular spring to force a seat ring against a valve ball is well known in the art. Examples of such springs are shown in United States Patent 4,020,864 to Church and United States Patent 3,392,743 to Pennington. Designs such as these are not adequate for the severe conditions just discussed as they require additional sealing members between the valve seats and the valve bodies. Such prior art designs require materials unsuitable for

0116719

use in severe service conditions. Other prior art designs do not maintain a constant seal between the seat and valve body and allow fluid to pass between the ball valve seats and the body of the valve creating erosive conditions during operation of the valve. This is especially troublesome when the fluid carries solid particles that may be trapped between the seats and the annular springs or between the springs and the valve body.

The present invention eliminates these shortcomings in that it provides a combination spring seal which, while providing the necessary pressure to engage the ball valve seat with the valve ball, maintains constant sealing contact between the seat and the valve body. Thus there is no possibility of fluid containing solids lodging between the sealing surfaces, causing leakage when the valve is closed and damaging the sealing surfaces.

The present invention involves a ball valve comprised of a central body having a chamber therein and end connectors having passages therethrough which aligning with the chamber of the central body form a flow passage through the valve body. A valve ball is located inside the chamber and has a flow passage which can be aligned with the flow passage of the valve body to allow flow through the valve. Annular ball seats located concentrically with the inlet and outlet ports of the valve body are biased against the ball to form a sealing contact with the ball. A combination spring seal biases the annular ball seats against the ball and sealingly engages both the ball seats and the valve body.

Figure 1 is an exploded view of a ball valve.

Figure 2 is a cutaway view showing the valve ball seat, the combination spring seal and the valve body.

Figure 3 is a cutaway view showing an alternate embodiment of the spring seal.

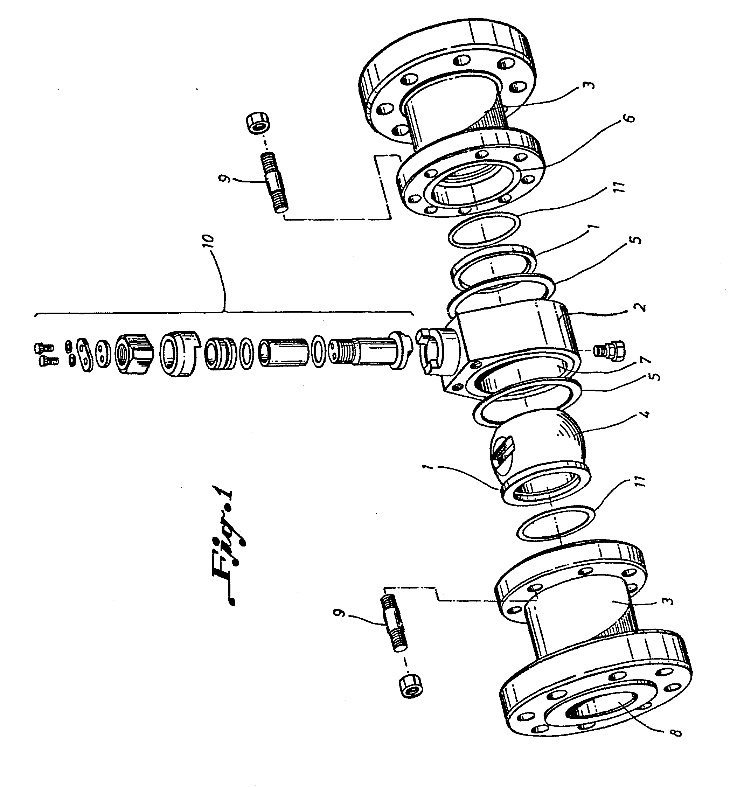

Figure 1 shows a general view of a ball valve. The valve shown is bidirectional although the present invention is equally applicable to mono-directional valves. As can be seen in Figure 1 a valve ball 4 is located within a central chamber 7 of a central valve body 2. End connections 3 form inlet and outlet ports which together with chamber 7 form a flow passage through said valve body. End connections 3 are joined to the central valve body 2 by bolts 9 and appropriate gaskets 5 form seals between the end connections and the central valve body. The valve ball 4 is rotated by means of valve stem 10 which incorporates suitable sealing means to prevent leakage of fluid from the valve around the stem. The ball 4 has a flow passage therethrough which may be aligned with the flow passage through the valve body to allow fluid flow through the valve or alternatively it may be positioned out of alignment with the flow passage of the valve to prevent fluid flow therethrough.

End connections 3 have recesses 6 formed in their respective faces which attach to the central body 2. These recesses are formed by surfaces extending substantially radially outward from said flow passage and by surfaces extending substantially axially toward said valve chamber.

Other expedients for forming the valve body are possible than the above described. For example, the valve body may be comprised of two flanged members with aligned flow ports and which form a chamber for receiving the valve ball between said ports. In such a case, recesses such as described above, would be formed surrounding said flow ports on opposite sides of the chamber within said valve body members.

As seen in Figure 1 annular seats 1 sealingly engage the valve ball. These seats are biased against the valve ball by annular spring seals 11. The spring seals are held in place between the ball seats and the end connections by recesses 6.

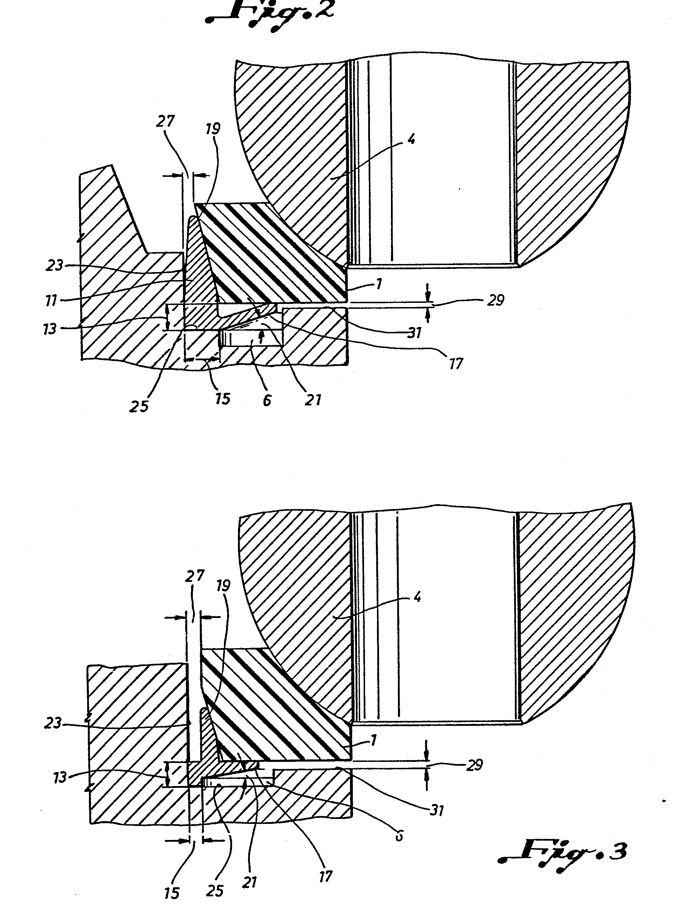

The combination spring seals and their relationship to the seats and valve body are shown in more detail in Figures 2 and 3. The two figures demonstrate two different geometric configurations of the spring seal. The spring seal shown in Figure 2 is the preferred form for the spring seal.

The spring seal itself is comprised of an annular ring portion having two projections extending nominally axially and radially from the ring. As seen in Figures 2 and 3, the annular ring portion has an outer surface 13 and an end surface 15 which are joined substantially perpendicularly to form the outer corner of the spring seal. Projecting nominally radially from the ring portion is spring member 17. The spring member is set at angle 21 of about 0 to about 25° from the plane of the end surface. As seen in Figure 3, the spring member may be appended to the ring portion at a position not continuous with the end surface. In such a case the measurement of the above angle is to be made from a plane parallel to the plane of the end surface and the phrase at an angle from the plane of the end surface is to be interpreted as covering the measurement of an angle from either the actual plane of the end surface or from a plane parallel thereto.

Projecting nominally axially from the ring portion is a lip 19. The inner surface of lip 19 provides a sealing surface to engage seat 1. The surface is set at an angle of from about 0 to about 25° from the axis of the ring to form a tapered metal to metal seal with the seat. The outer surface is relieved by either being angled as shown in Figure 2 or offset as shown in Figure 3 to allow for radial flexibility.

Recess 6 is also shown in greater detail in Figures 2 and 3. The recess is formed by radial surface 23 and axial surface 25. The outer surfaces of the spring seal form a metal to metal seal with these surfaces. Gaps 27 and 29 allow for thermal expansion of the ball and seat. Flat 31 prevents over travel and overstress of the spring seal.

During assembly, the seals (seat to spring seal and seal spring to end connection) are engaged and the spring is preloaded. The outer corner of the spring seal remains in constant contact with the outer corner of the recess, forming a metal to metal seal. The inner surface of lip 19 likewise remains in constant metal to metal contact with the seat forming a metal to metal seal. These two sealing engagements are not broken during adjustment of the valve and therefore no fluid can leak between the valve body and the seats. The spring seal is designed to allow radial and axial movement to prevent lockup during a thermal transient. The flat 31 on the end connection prevents over travel (and overstress) of the spring. During a thermal transient, the spring absorbs axial growth to limit ball to seat load. In addition the lip of the spring seal moves radially to absorb radial growth.

The foregoing description of the invention has been directed to a specific embodiment. Modifications and variations of the invention will be apparent to those skilled in the art. Applicants intend to cover all such equivalent modifications and variations as fall within the true spirit and scope of the invention.

CLAIMS:

1. A ball valve characterized in that it comprises:

a valve body comprised of a central body having a chamber therein and end connectors having ports which align with said chamber to form a flow passage through said valve body;

a valve ball having a flow passage therethrough and rotatable within said chamber between flow control positions wherein said passages are aligned and are out of alignment;

at least one annular ball seat positioned concentrically with respect to said valve body flow passage and biased against said ball to form an area of sealing contact with said ball; and

combination spring seal for biasing said seat against said ball, said spring seal being positioned between said end connection and said seat so as to sealingly engage both said seat and said end connection.

2. The ball valve of claim 1 further characterized in that said end connection has a recess formed in its face which adjoins said central body, said recess being concentric with said port and being formed by surfaces extending substantially radially outward from said body flow passage and extending substantially axially toward said central body; and wherein said spring seal is held in place between said seat and the surfaces of said recess.

0116719

3. The ball valve of claim 2 further characterized in that said spring seal comprises:

an annular ring portion having an outer surface and an end surface joined to one another substantially perpendicularly to form an outer corner;

a spring portion projecting nominally radially from said ring portion at an angle of up to 25° from the plane of said end surface; and

a lip portion projecting nominally axially from said ring portion, wherein said outer corner sealingly engages the surfaces of said recess of said end connection, said lip sealingly engages said seat and said spring biases said seat against said ball.

4. A ball valve characterized in that it comprises:

a valve body having a valve chamber and inlet and outlet ports communicating with said chamber to form a flow passage through said valve body, said valve body having at least one annular recess concentrically positioned around said flow passage on one side of said chamber, said recess being formed by surfaces extending substantially radially outward from said flow passage and extending substantially axially toward said valve chamber;

a valve ball having a flow passage therethrough and rotatable within said chamber between flow control positions wherein said passages are aligned and are out of alignment;

at least one annular ball seat positioned concentrically with respect to said valve body flow passage and biased against said ball so as to sealingly engage said ball;

a combination spring seal for biasing said seat against said ball, said spring seal being positioned between said seat and the surfaces of said recess, wherein said spring seal sealingly engages said seat and the surfaces of said recess.

5. The ball valve of claim 4 further characterized in that said spring seal comprises:

an annular ring portion having an outer surface and an end surface joined to one another substantially perpendicularly to form an outer corner;

a spring portion projecting nominally radially from said ring portion at an angle of up to 25° from the plane of said end surface; and

a lip portion projecting nominally axially from said ring portion, wherein said outer corner sealingly engages the surfaces of said recess of said end connection, said lip sealingly engages said seat and said spring biases said seat against said ball.

0116719

6.   A ball valve characterized in that it comprises:

a valve body having a valve chamber and inlet and
outlet ports communicating with said chamber,
said valve body having at least one annular
recess concentrically positioned around said
flow passage on one side of said chamber,
said recess being formed by surfaces extending
substantially radially outward from said flow
passage and extending substantially axially
toward said valve chamber;

a valve ball having a flow passage therethrough
and rotatable within said chamber between
flow control positions wherein said passages
are aligned and are out of alignment;

at least one annular ball seat positioned concentrically with respect to said valve body flow
passage and biased against said ball so as to
sealingly engage said ball; and

a combination spring seal comprised of:

an annular ring portion having an outer surface
and an end surface joined to one another
substantially perpendicularly to form an
outer corner;

a spring portion projecting nominally radially
from said ring portion at an angle of up
to 25° from the plane of said end surface;
and

a lip portion projecting nominally axially from said ring portion, wherein said outer corner sealingly engages the surfaces of said recess of said end connection, said lip sealingly engages said seat and said spring biases said seat against said ball.

1/2

Fig.1

_Fig.2_

_Fig.3_